# EUROPEAN PATENT SPECIFICATION

(11) **EP 1 956 892 B1**
(45) Date of publication and mention of the grant of the patent: **21.07.2010**
(21) Application number: 06812825.5
(22) Date of filing: 28.11.2006
(51) Int. Cl.: A01K 87/08

(54) **FISHING ROD**
ANGELRUTE
CANNE À PÊCHE

(30) Priority: 01.12.2005 NO 20055678; 06.09.2006 NO 20063982
(43) Date of publication of application: 20.08.2008
(73) Proprietor: ZPEY System AS, 0473 Oslo (NO)
(72) Inventor: EVENSEN, Arve, N-1929 Auli (NO)
(74) Representative: Onsagers Ltd
(86) International application number: PCT/NO2006/000436
(87) International publication number: WO 2007/064217

(56) References cited:
- DE-A1- 3 014 626
- US-A- 3 791 063
- US-A- 6 067 741

## Description

### Introduction

The present invention relates to fishing tackle. More specifically, the invention relates to a fishing rod with a flexible rear handle that gives the fishing rod good ergonomic properties.

### The prior art

Rod fishing requires mastery of casting technique with repetition of the same movements over a period of time. In the case of fly fishing, a special casting technique is required to be able to propel a lightweight little fly as far from the rod as possible. The mastery threshold is high, and it often takes a beginner several years to achieve a satisfactory technique. The result may be a stiff neck, sore arms, shoulder muscles and back.

Traditional fishing rods are supplied in both one and two-handed versions. Two-handed rods are associated with problems familiar to people with back trouble.

The design and characteristics of the handle of today's fishing rods make it difficult to perform a physiologically "correct" cast.

US-6067741 is considered to represent the closest prior art in the field. The patent describes an extension handle that can be placed on the outside of an existing handle of an ordinary straight fishing rod. The shape of the extension handle may resemble an elongated S. The extension handle enables the rod to be used with different casting and holding positions.

A loose handle as described in the US patent will not be particularly practical. It will be a loose fit, and there will be no uniformity in the rod's action. Nor can the handle be adapted to the different rod classes. The US patent is based on principles for hooking of fish and casting of heavy tackle, spinners, sinkers, etc. It is not suitable for light fishing tackle found, e.g., on fly fishing rods, since the whole concept of holding the upper arm still on a fly fishing rod is not present or taken into consideration in the said US patent.

Document DE-A-3014626 discloses a fishing rod comprising a rear handle and a front handle in the rear part of the fishing rod, wherein the rear handle is curved in shape.

The present invention attempts to solve the shortcomings and problems associated with the prior art for rod fishing.

The invention describes a fishing rod which has characteristics and a design that provide a lower learning threshold for performing an optimal cast. In general, the arms need to move less in order to achieve a good cast, thereby contributing to less injuries due to wear and strain with prolonged use.

The front part of a rear shaft is flexible (by flexible we mean that the rear part of the fishing rod is dynamic and pliable with regard to the use of forces and material), and may have different degrees of rigidity that can be adapted to each individual user. This will enable the operating experience to be optimised by the user achieving maximum efficiency in each cast without having to use as much energy and movement as when using an ordinary fishing rod.

In an alternative embodiment the shaft's rigidity can be adjusted by a screw at the end of the shaft. In this case the rear shaft will be of a hollow design. The degree of rigidity/flexibility of the shaft can thereby be changed during use.

The fishing rod according to the invention is particularly well suited to fly fishing, but the special curved shape of the rear shaft has been shown to be advantageous for all types of fishing rod.

### Summary of the invention

The object of the present invention is to provide a fishing rod which offers optimal casting technique with least possible movement of arms and body.

The fishing rod is composed of a rear handle with a curved shape and flexible properties in its front part, and the rest of the fishing rod is composed of a straight rod.

In one embodiment the handle and rod are made in one piece where the rear part comprising the handle is curved.

In an alternative embodiment the handle comprises an independent unit which is attached to the rear part of the rod. This is accomplished by the handle's front part being pushed into a hollow end of the fishing rod. The handle may be secured by frictional forces, or it may be tightened against the rod by a fastening screw in the front part of the handle.

The flexible properties of the handle are achieved by the front part of the handle being made of a flexible material. It is also this part of the handle that is curved.

The flexible properties of the handle can be influenced by having different ratios between the length of the front and rear parts of the handle, the flexible and non-flexible parts respectively.

In one embodiment the degree of flexibility in the handle may be adjusted by a tightening screw attached to the rear end of the handle. In the case of such an arrangement, the handle is designed in a hollow form with an internal tightening mechanism.

The characteristic features of a fishing rod according to the present invention will be apparent in the independent claim 1 in the attached set of claims.

Further characteristic features of the fishing rod are described in more detail in the associated dependent claims.

### Detailed description

The invention will now be described in greater detail with reference to figures 1 to 5 which illustrate embodiments of the fishing rod, in which:
Figure 1 illustrates a complete fishing rod according to the invention;
Figure 2 illustrates different designs of fishing rods;
Figure 3 illustrates a fishing rod where the shaft and the rod are composed of two separate parts;
Figure 4 illustrates how the flexibility of the shaft influences the pliability;
Figure 5 illustrates theoretical ratios between a straight fishing rod and one with a curved shaft.

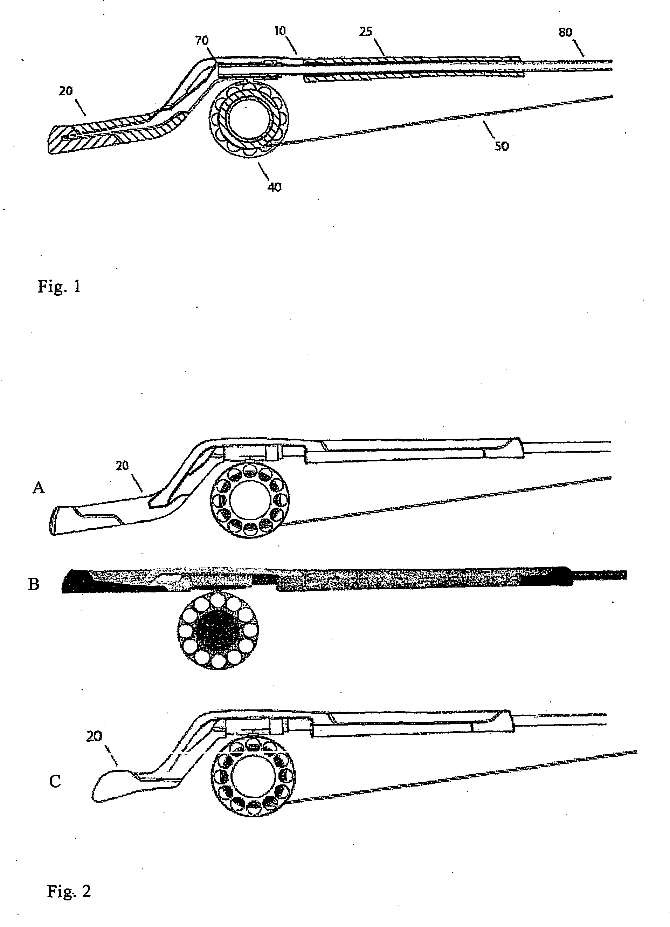

Figure 1 illustrates the main components, which comprise the fishing rod 10 according to the invention, and which provide an optimal casting technique.

The fishing rod 10 comprises a main part which is the rod 80. This is a straight rod 80 with a front and rear end, where the rod 80 has flexible properties according to the prior art in the field. To the rear end of the rod 80 is attached a fishing reel 40 with a fishing line 50 which goes from the fishing reel 40 through guide rings (not shown) up to the front part of the rod 80.

The rear part of the rod 80 further comprises a front handle 25.

The rear part of the fishing rod 10 further comprises a rear handle 20, hereinafter called handle 20, with a curved shape and flexible properties.

In two-handed fishing, the rear and front handles 20, 25 respectively are held in each hand.

In one-handed fishing, the front handle is gripped, while the rear handle is supported in against the body.

In an embodiment the handle 20 of the fishing rod 10 may be manufactured together with the rest of the rod 80, with the result that both rod 80 and handle 20 are made in one piece. The rear part described as handle 20 will be able to be produced with different materials and characteristics. These characteristics may be individually adapted for specific target groups and requirements.

The rod's 80 characteristics are determined by the fibres in the rod amongst other things, and are currently produced in many different materials, whereof carbon is most commonly used. Most manufacturers are concerned with the casting characteristics of a fishing rod, and aim to achieve as dynamic a fishing rod as possible, with evaluation of thickness of materials, how easy it is to cast, and to what extent the cast is felt right down in the handle. This is difficult to achieve in today's fishing rods, since the thickness of the material at the rod's handle is relatively great.

In a preferred embodiment the new handle 20 according to the present invention will be engaged with carbon, for example, by means of a stocking which supplies force to the fibres by means of the design of flexure. This will increase the sensitivity and experience of the cast and contribute towards greater ergonomic and performance properties. A transition 70 between the rod 80 and the handle 20 separates the straight part of the rod from the curved part.

Figure 2 depicts three different designs of fishing rods.
A illustrates a two-handed fishing rod with a curved handle 20 in the rear part according to the present invention.
B illustrates a classic straight fishing rod.
C illustrates a one-handed fishing rod with a curved handle 20 in the rear part according to the present invention.

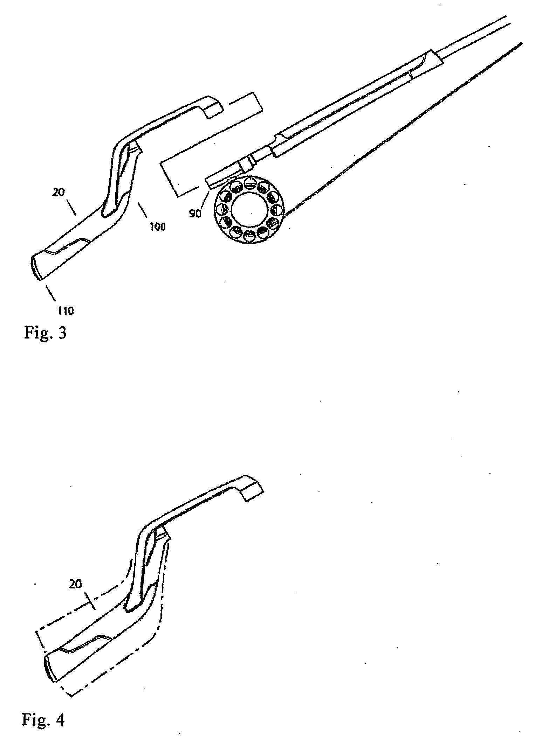

Figure 3 illustrates an alternative embodiment where the handle 20 comprises an independent unit which is attached to the rear part of the rod 80, thereby forming a transition 70 between the rear part of the rod 80, where the front handle 25 is, and the handle 20. This is accomplished by pushing the handle 20 into the hollow end 90 of the rod 80. The handle 20 may, for example, be securely tightened against the rod 80 by a fastening screw 100 in the front part of the handle 20. Other types of attachment may also be possible, and are presumed to be known to a person skilled in the art.

The flexible properties of the handle 20 are achieved by the front part of the handle 20 being made of a flexible material such as, for example, carbon, aluminium, graphite, nano material, glass fibre, titanium. The material depends on which type of rod has to be produced and for which target group it is intended.

The curved shape of the handle 20 results from the front part of the handle 20 being in the shape of a bow.

The flexible properties of the handle 20 can be influenced by having different ratios between the length of the front and rear parts of the handle 20, the flexible and non-flexible parts respectively. With regard to fly fishing and fly fishing rods, a classification is currently in use called AFTM (= weight) and the weight is the part of the line that is outside the guide ring on the end of a fly rod out to the trace. These classifications relate to the use of equipment and help the customer and the consumer to purchase the right rod for the right purpose. When fishing for salmon, an AFTM 9-12 is often chosen as this is intended for salmon and will be relatively heavy to cast with on account of this. This class of line will be available in both one-handed and two-handed rods. It is therefore important to be able to offer and adapt individual handles based on AFTM and user. The front part 25 of the handle on both one-handed and two-handed rods must consist of a part where the right/left hand is located.

The length of this handle is determined by several known criteria: firstly the length of the rod, secondly the class of line and thirdly the target group (children, ladies, men, invalids). Here the actual bottom of the rod's blank will also be fixed and will act in approximately the same way as a normal present day fishing rod. The rear curved part composed of the rear part of the handle 20 will have different properties associated with the above criteria.

The rear part 80 of the handle 20 will be produced in different materials and thicknesses in order to attain the desired flexure and shape for the different target groups.

The handle 80 will have various flexural properties based on body, ergonomics, AFTM, length and the properties of the rod material.

In one embodiment the degree of flexibility can be adjusted by a tightening screw 110 attached in the rear part of the handle 20. The tightening screw 110 is attached to a tightening mechanism (not shown) where an internal rubber sausage is tightened when the tightening screw 110 is turned.

The handle 20 is lined with a material that provides a high degree of friction even when wet. The material is preferably cork, but in an alternative embodiment it may be moulded materials of a suitable kind.

Figure 4 illustrates how the handle 20 changes position dependent on the direction of the flexing (dotted lines).

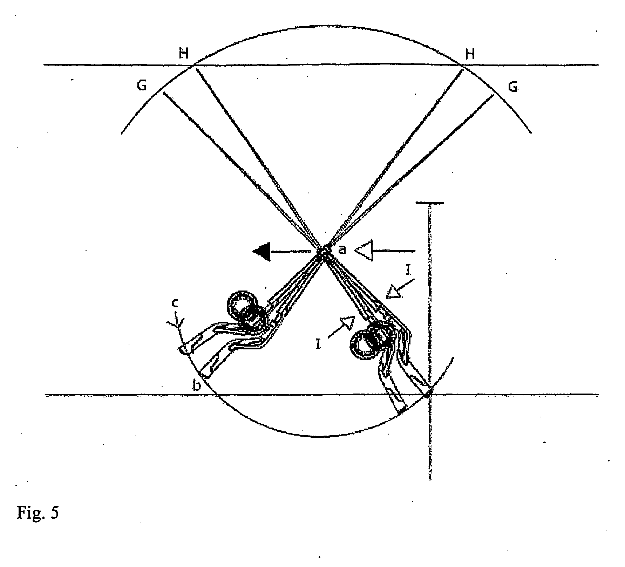

Figure 5 shows the physical differences between a straight fishing rod and one with a curved handle. By keeping point "a" as stable and still as possible, the torque and the energy in the rod/line will be transferred to the maximum extent. This is possible due to the new design of the handle. "a" denotes right hand/torque point; "b" denotes handle/left hand; "c" denotes kinetic energy; "G" denotes the new handle according to the invention, and "H" denotes a traditional straight handle.

With a normal straight handle, point "a" will be moved, thereby causing the torque and energy in the cast to also disappear. At best it will be maintained by good timing, but in this case it will also be moved further down in the shaft.

It can be seen from figure 5 that the need is avoided to push the right arm forward in the cast, thereby performing an ill-judged and unbalanced cast. When using a fishing rod 10 according to the invention, the right hand and arm will be held closer to the body, thereby causing both torque, "plane of the cast" and body to be correctly balanced.

The kinetic energy "C" will also be far better utilised and it will be possible to automatically "control" cast and line in an entirely new way, since the left hand has more power and exploits the energy in the fibres better.

By increasing distance "I" to the body in the rear part of the rod by 4 cm, this will become as much as 80 cm at the tip of a 15" long rod. The plane of the cast is therefore balanced and torque is maintained without movement of point "a" (right hand). Thus it is possible to perform a cast without pushing the left arm forwards, which is the cause of a great deal of injury and imbalance in the cast.

The actual design helps to increase the force with the left hand, and ideally it is here the whole cast should take place.

The core of the present invention, as already mentioned, is that the rear handle of a fishing rod is curved as can be seen in the figures, and furthermore that parts of this handle are made flexible.

The design is particularly well suited to fly fishing rods where a special casting technique is required, but the design is also advantageous for all types of fishing rod intended for both salt water and fresh water.

It will be possible to provide different variations and combinations which are within the inventive concept as presented herein.

The drawings should therefore be regarded as illustrative of examples of embodiments, and the invention should not be considered to be limited thereto, but is intended to cover all embodiments as will be apparent from the attached set of claims.

## Claims

1. A fishing rod (10) for optimal casting technique, which comprises a rear handle (20) and a front handle (25) in the rear part of the fishing rod (10), where the rear handle (20) is curved in shape and where the rest of the fishing rod (10) is composed of a straight rod (80), **characterised in that** the rear handle (20) has flexible properties in its front part.

2. A fishing rod (10) according to claim 1,
**characterised in that** the handle (20) and the straight rod (80) are made in one piece.

3. A fishing rod (10) according to claim 1,
**characterised in that** the handle (20) is composed of an independent unit which is attached to the rear part of the rod (80) by the handle's (20) front part being pushed into a hollow end (90) on the fishing rod (10).

4. A fishing rod (10) according to claim 3,
**characterised in that** the handle (20) is securely tightened against the rod (80) by a fastening screw (100) in the front part of the handle (20).

5. A fishing rod (10) according to claim 1,
**characterised in that** the flexible properties of the handle (20) are achieved by the front part of the handle (20) being made of a flexible material.

6. A fishing rod (10) according to claim 1,
**characterised in that** the curved shape of the handle (20) is produced by the front part of the handle (20) being in the shape of a bow.

7. A fishing rod (10) according to claims 1 and 5,
**characterised in that** the flexible properties of the handle (20) is influenced by having different ratios between the length of the front and rear parts of the handle (20), the flexible and non-flexible parts respectively.

8. A fishing rod (10) according to claims 1 and 5,
**characterised in that** the degree of flexibility is adjusted by a tightening screw (110) attached in the rear part of the handle (20) which in this case is hollow in design.

9. A fishing rod (10) according to claim 1,
**characterised in that** the handle (20) is lined with a material that provides a high degree of friction even when wet.

10. A fishing rod (10) according to claim 9,
**characterised in that** the handle (20) is lined with a cork material.

## Patentansprüche

1. Angelrute (10) für eine optimale Wurftechnik, die einen rückwärtigen Griff (20) und einen vorderen Griff (25) im rückwärtigen Teil der Angelrute (10) aufweist, wobei der rückwärtige Griff (20) eine gekrümmte Form aufweist und der Rest der Angelrute (10) aus einer geraden Rute (80) gebildet ist,
**dadurch gekennzeichnet,**
**daß** der rückwärtige Griff (20) flexible Eigenschaften in seinem vorderen Teil aufweist.

2. Angelrute (10) nach Anspruch 1,
**dadurch gekennzeichnet,**
**daß** der Griff (20) und die gerade Rute (80) in einem Stück hergestellt sind.

3. Angelrute (10) nach Anspruch 1,
**dadurch gekennzeichnet,**
**daß** der Griff (20) aus einer unabhängigen Einheit gebildet ist, die **dadurch** an dem rückwärtigen Teil der Rute (80) angebracht ist, daß der vordere Teil des Griffs (20) in ein hohles Ende (90) in der Angelrute (10) hineingedrückt ist.

4. Angelrute (10) nach Anspruch 3,
**dadurch gekennzeichnet,**
**daß** der Griff (20) mittels einer Befestigungsschraube (100) in dem vorderen Teil des Griffs (20) fest an der Rute (80) festgezogen ist.

5. Angelrute (10) nach Anspruch 1,
**dadurch gekennzeichnet,**
**daß** die flexiblen Eigenschaften des Griffs (20) **dadurch** erzielt werden, daß der vordere Teil des Griffs (20) aus einem flexiblen Material hergestellt ist.

6. Angelrute (10) nach Anspruch 1,
**dadurch gekennzeichnet,**
**daß** die gekrümmte Form des Griffs (20) **dadurch** gebildet ist, daß der vordere Teil des Griffs (20) bogenförmig ausgebildet ist.

7. Angelrute (10) nach Anspruch 1 und Anspruch 5,
**dadurch gekennzeichnet,**
**daß** die flexiblen Eigenschaften des Griffs (20) **dadurch** beeinflußt werden, daß unterschiedliche Verhältnisse zwischen der Länge des vorderen und des rückwärtigen Teils des Griffs (20) bzw. dem flexiblen und dem unflexiblen Teil vorgegeben werden.

8. Angelrute (10) nach Anspruch 1 und Anspruch 5,
**dadurch gekennzeichnet,**
**daß** das Ausmaß an Flexibilität durch eine Festspannschraube (110) eingestellt wird, die in dem rückwärtigen Teil des Griffs (20) angebracht ist, der in diesem Fall hohl ausgebildet ist.

9. Angelrute (10) nach Anspruch 1,
**dadurch gekennzeichnet,**
**daß** der Griff (20) mit einem Material beschichtet ist, das auch im nassen Zustand für ein hohes Ausmaß an Reibung sorgt.

10. Angelrute (10) nach Anspruch 9,
**dadurch gekennzeichnet,**
**daß** der Griff (20) mit einem Korkmaterial beschichtet ist.

## Revendications

1. Canne à pêche (10) permettant une technique de lancer optimal, qui comprend une poignée arrière (20) et une poignée avant (25) situées dans la partie arrière de la canne à pêche (10), dans laquelle la poignée arrière (20) présente une forme incurvée, et dans laquelle le reste de la canne à pêche (10) se compose d'une perche droite (80), **caractérisée en ce que** la poignée arrière (20) présente des propriétés de flexibilité dans sa partie avant.

2. Canne à pêche (10) selon la revendication 1, **caractérisée en ce que** la poignée (20) et la perche droite (80) sont réalisées d'un seul tenant.

3. Canne à pêche (10) selon la revendication 1, **caractérisée en ce que** la poignée (20) se compose d'une unité indépendante qui est fixée à la partie arrière de la perche (80) par la partie avant de la poignée (20) qui est poussée dans une extrémité creuse (90) située sur la canne à pêche (10).

4. Canne à pêche (10) selon la revendication 3, **caractérisée en ce que** la poignée (20) est serrée solidement contre la perche (80) par une vis de fixation (100) située dans la partie avant de la poignée (20).

5. Canne à pêche (10) selon la revendication 1, **caractérisée en ce que** les propriétés de flexibilité de la poignée (20) sont obtenues par le fait que la partie avant de la poignée (20) est réalisée dans un matériau flexible.

6. Canne à pêche (10) selon la revendication 1, **caractérisée en ce que** la forme incurvée de la poignée (20) est obtenue par le fait que la partie avant de la poignée (20) présente une forme d'arc.

7. Canne à pêche (10) selon la revendication 1 et la revendication 5, **caractérisée en ce que** les propriétés de flexibilité de la poignée (20) sont influencées par le fait qu'elle présente des rapports différents entre la longueur des parties avant et arrière de la poignée (20), des parties flexibles et non flexibles respectivement.

8. Canne à pêche (10) selon la revendication 1 et la revendication 5, **caractérisée en ce que** le degré de flexibilité est ajusté par une vis de serrage (110) fixée dans la partie arrière de la poignée (20) qui présente dans ce cas une conception creuse.

9. Canne à pêche (10) selon la revendication 1, **caractérisée en ce que** la poignée (20) est recouverte d'un matériau qui procure un degré de frottement élevé même quand il est humide.

10. Canne à pêche (10) selon la revendication 9, **caractérisée en ce que** la poignée (20) est recouverte d'un matériau de liège.
